# EUROPÄISCHE PATENTANMELDUNG

(11) **EP 4 576 364 A1**
(43) Veröffentlichungstag der Anmeldung: **25.06.2025**
(21) Anmeldenummer: 23219069.4
(22) Anmeldetag: 21.12.2023
(51) Int. Cl.: H01M 50/244, H01M 50/258, H01M 50/262, H01M 50/207

(54) **BATTERIEZELLENMODUL FÜR EINE MECHANISCHE KASKADIERUNG VON MEHREREN BATTERIEZELLENMODULEN**

(71) Anmelder: Siemens Aktiengesellschaft, 80333 München (DE)
(72) Erfinder: Schricker, Barbara, 91058 Erlangen (DE)
(74) Vertreter: Siemens Patent Attorneys

(57) **Zusammenfassung**

Es wird ein Batteriezellenmodul für eine mechanische Kaskadierung von mehreren Batteriezellenmodulen vorgeschlagen, wobei am ersten Ende einer Längsachse des Batteriezellenmodules ein männliches Verbindungselement und am zweiten Ende der Längsachse des Batteriezellenmodules ein weibliches Verbindungselement angeordnet ist, wobei die Verbindungselemente dazu ausgebildet sind, wenigstens zwei Batteriezellenmodule durch eine zerstörungsfrei lösbare unmittelbare Verbindung der Verbindungselemente mechanisch zu kaskadieren.

Weiterhin betrifft die Erfindung ein Batteriezellenmodulsystem.

## Beschreibung

Die Erfindung betrifft ein Batteriezellenmodul zur mechanischen Kaskadierung von mehreren Batteriezellenmodulen gemäß dem Oberbegriff des unabhängigen Patentanspruches 1 sowie ein Batteriezellenmodulsystem gemäß des unabhängigen Patentanspruches 10.

Lithium-Ionen-Batterien gelten als "grüne" Zukunftstechnologie. Allerdings sind Herausforderungen wie ein sparsamer Umgang von Ressourcen und das Recycling gerade in diesem Bereich noch nicht gelöst und zu wenig angegangen.

Lithium-Ionen-Batterien bestehen je nach Spannung und Energieinhalt aus mehreren/ vielen Einzelzellen, die miteinander in Serie und parallel verschaltet werden. Die Verschaltung der Zellen erfolgt häufig durch Verschweißen, wodurch ein niedriger Verschaltungswiderstand realisiert wird.

Im Hinblick auf Wartung, Recycling und eine anzustrebende Kreislaufwirtschaft erweist sich diese Lösung als eher nachteilig. Durch den Bau von größeren Einzelzellen, ließe sich der Gewichtsanteil passiven Materials (wie Zellgehäuse, Zellverbinder) reduzieren, wodurch Ressourcen geschont werden könnten. Die Baugröße der einzelnen Zellen, ist aber vor allem bei Rundzellen stark limitiert, da die Zellen in der Lage sein müssen die beim Betrieb der Zellen im Zellinneren entstehende Wärme ausreichend schnell abgeben zu können, um eine Überhitzung der Zelle mit allen unerwünschten Nebeneffekten vermeiden zu können.

Der vorliegenden Erfindung liegt die Aufgabe zugrunde, eine mechanische Kaskadierung von mehrerer Batteriezellenmodulen bereitzustellen.

Die Aufgabe wird durch ein Batteriezellenmodul mit den Merkmalen des unabhängigen Patentanspruches 1 und durch ein Batteriezellenmodulsystem mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Batteriezellenmodul für eine mechanische Kaskadierung von mehreren Batteriezellenmodulen, hat am ersten Ende einer Längsachse des Batteriezellenmodules ein männliches Verbindungselement und am zweiten Ende der Längsachse des Batteriezellenmodules ein weibliches Verbindungselement, wobei die Verbindungselemente dazu ausgebildet sind, wenigstens zwei Batteriezellenmodule durch eine zerstörungsfrei lösbare unmittelbare Verbindung der Verbindungselemente mechanisch zu kaskadieren.

Eine unmittelbare Verbindung meint eine Verbindung zwischen wenigstens zwei Verbindungselementen, ohne dass ein drittes Verbindungselement, welches zwischen zwei Verbindungselementen eine mittelbare Verbindung herstellt, benötigt wird.

Ein männliches Verbindungselement zeichnet sich durch wenigstens einen exponierten Fortsatz, insbesondere als Kontaktstift, an einem von wenigstens zwei zu verbindenden Körpern aus. Auch kann einer der zu verbindenden Körper durch eine Verjüngung seines Querschnitts an einem Ende der Längsachse zu einem männlichen Verbindungselement werden, ohne dass hierfür ein Fortsatz vorhanden sein muss.

Ein weibliches Verbindungselement zeichnet sich durch wenigstens eine offene Kavität an wenigstens einem zu verbindenden Körper aus, wobei Form und Lage der Kavität das Einführen des männlichen Verbindungselements ermöglichen muss. Der Formfaktor der Kavität entspricht hierbei im Wesentlichen dem Negativ zum männlichen Verbindungselement.

Durch die vorliegende Erfindung wird ein Batteriezellenmodul mit vorteilhaften modularen Eigenschaften beschrieben. Das ist deshalb der Fall, da das Batteriezellenmodul ein weibliches Verbindungselement und ein männliches Verbindungselement aufweist und damit ohne Zuhilfenahme einer weiteren Komponente eine zerstörungsfrei lösbare Verbindung mit einem weiteren Batteriezellenmodul eingehen kann.

Gemäß einer vorteilhaften Ausgestaltung können die Verbindungselemente zu einer Sicherung der zerstörungsfrei lösbaren Verbindung wenigstens zweier Batteriezellenmodule mittels eines Splints ausgebildet sein.

Ein Splint dient als Sicherungselement im Maschinenbau und realisiert eine Lagesicherung von verbundenen Bauteilen. Ein Splint kann abhängig von den zu sichernden Bauteilen in Form eines Stifts, Bolzens oder auch gebogenen Drahtes ausgebildet sein.

Die Sicherung durch einen Splint verhindert vorteilhafterweise, dass die verbundenen Batteriezellenmodule sich im Betrieb ungewollt voneinander lösen, insbesondere durch Vibration in Applikationen der Elektromobilität. In einer vorteilhaften Weiterbildung der Erfindung ist das männliche Verbindungselement mit einem Außengewinde und das weibliche Verbindungselement mit einem Innengewinde zur Ausbildung einer zerstörungsfrei lösbaren Schraubverbindung ausgebildet.

Dadurch kann vorteilhafterweise eine preislich günstigere Sicherung vor ungewolltes Lösen der Verbindung zwischen wenigstens zweier Batteriezellenmodule mittels Schraubensicherungslack realisiert werden. Darüber hinaus bietet farbiger Schraubensicherungslack vorteilhafterweise eine Möglichkeit eine sich lösende Verbindung zwischen zwei Batteriezellenmodule vorzeitig visuell zu erkennen.

Schraubensicherungslack, Kennzeichnungslack, Siegellack oder auch Plombierlack wird flüssig auf ein Verbindungselement aufgetragen und härtet nach Fertigstellung der Verbindung aus. Der Lack verhindert ähnlich dem Splint ein Lösen der Verbindung durch Störeffekte wie Vibration und macht, sofern es sich nicht um klaren Lack handelt, ein mögliches Lösen der Verbindung, insbesondere durch Manipulation, besser sichtbar.

Gemäß einer vorteilhaften Ausgestaltung können die Verbindungselemente zur Ausbildung einer zerstörungsfrei lösbaren Steckverbindung ausgebildet sein.

Eine Steckverbindung wird durch das Einführen eines männlichen Verbindungselements in ein weibliches Verbindungselement, fertiggestellt. Es ist keine Drehung, wie bei einem Gewinde notwendig, die Verbindung wird durch die Haftreibung zwischen männlichen Verbindungselement und weiblichen Verbindungselement gehalten.

Dadurch kann vorteilhafterweise die Fertigstellung von Verbindungen zwischen Batteriezellemodulen einfacher, insbesondere gegenüber einer Schraubverbindung, automatisiert werden.

In einer vorteilhaften Weiterbildung der Erfindung sind die Verbindungselemente zur Ausbildung einer zerstörungsfrei lösbaren Schnappverbindung ausgebildet.

Eine Schnappverbindung kann eine lösbare oder unlösbare Verbindung von Bauteilen realisieren und sie kann mittels eines männlichen Verbindungselements wie einem Schnapphaken, Schnappkugel, Schnappzylinder etc. ausgeführt werden. Ein elastisch verformbares Fügeteil oder Fügeteil welches elastisch gelagert ist, wird hierbei während des Fügens durch Krafteinwirkung aus seiner Ausgangslage gebracht und kehrt erst beim vollständigen Einführen des männlichen Verbindungselements in das weibliche Verbindungselement in seine Ausgangslage zurück.

Der Einsatz einer Schnappverbindung ist vorteilhafterweise mit einer Steckverbindung kombinierbar und erlaubt vorteilhafterweise auch den Verzicht auf einen Splint zur Sicherung.

Gemäß einer vorteilhaften Ausgestaltung kann das männliche Verbindungselement als zylinderförmige Erweiterung des Batteriezellenmoduls mit reduzierten Außendurchmesser ausgebildet sein.

Die Ausführung des männlichen Verbindungselements als zylinderförmige Erweiterung des Batteriezellenmoduls ist vorteilhafterweise, aufgrund seiner Achsensymmetrie als Rotationskörper, einfacher automatisiert zu fügen. Das ist deshalb der Fall, weil die Drehung des männlichen Verbindungselements entlang der Rotationsachse vernachlässigt werden kann beim Fertigstellen der Verbindung.

In einer vorteilhaften Weiterbildung der Erfindung kann das männliche Verbindungselement als Fortsatz des Batteriezellenmoduls mit einem Sehnenpolygon als Querschnittsfläche ausgebildet sein, wobei der Durchmesser des zum Sehnenpolygon gehörenden Kreises, den Außendurchmesser des Batteriezellenmoduls nicht überschreitet.

Mit einer Durchmesserbegrenzung, auf den Außendurchmesser des Batteriezellenmoduls, für den Kreis, dem das genannte Sehnenpolygon zugeordnet ist, wird vorteilhafterweise gewährleistet, dass die Batteriezellenmodule ihre Rotationssymmetrie beibehalten.

Gemäß einer vorteilhaften Ausgestaltung kann das Batteriezellenmodul rohrförmig ausgebildet sein.

Die rohrförmige Ausführung des Batteriezellenmoduls, schafft vorteilhafterweise eine größere Fläche für die Abstrahlung von Wärme und wirkt sich dadurch positiv auf die optimale Temperierung des Batteriezellenmoduls aus.

In einer vorteilhaften Weiterbildung der Erfindung kann das Batteriezellenmodul entlang seiner Längsachse mit einen sich verjüngenden Außendurchmesser ausgebildet sein.

Durch einen sich entlang der Längsachse verjüngenden Außendurchmesser des Batteriezellenmoduls, wird vorteilhafterweise das Batteriezellenmodul als ein unter Formschluss, mit anderen Batteriezellenmodulen, stapelbarer Körper ausgebildet. Das Batteriezellenmodul kann dabei insbesondere kegelförmig oder kegelstumpfförmig ausgebildet sein.

Erfindungsgemäß kann jedes der Batteriezellenmodule an einem ersten Ende seiner Längsachse ein männliches Verbindungselement und an einem zweiten Ende seiner Längsachse ein weibliches Verbindungselement aufweisen, wobei die Verbindungselemente dazu ausgebildet sind, die zwei Batteriezellenmodule durch eine zerstörungsfrei lösbare Verbindung der Verbindungselemente zu dem Batteriezellenmodulsystem unmittelbar mechanisch zu kaskadieren.

Durch die vorliegende Erfindung wird ein Batteriezellenmodulsystem mit vorteilhaften modularen Eigenschaften beschrieben. Das ist deshalb der Fall, da wenigstens zwei Batteriezellenmodule jeweils ohne Zuhilfenahme einer weiteren Komponente eine zerstörungsfrei lösbare Verbindung miteinander eingehen kann.

In einer vorteilhaften Weiterbildung der Erfindung können wenigstens zwei verbundene Batteriezellenmodule gemeinsam ein Batteriezellenmodulsystems mit einem rohrförmigen Hohlraum ausbilden, wobei dieser rohrförmige Hohlraum zur Durchleitung eines Kühlfluides ausgebildet ist.

Die Durchleitung des Kühlfluides durch den rohrförmigen Hohlraum innerhalb des Batteriezellenmodulsystems verbessert vorteilhafterweise eine passive Kühlung des Batteriezellenmoduls, insbesondere, wenn die räumliche Anordnung des Batteriezellenmoduls einen Kamineffekt ermöglicht.

In einer vorteilhaften Weiterbildung der Erfindung kann wenigstens ein Ventilator an wenigstens einem Ende des Batteriezellenmodulsystems angeordnet sein, wobei der Ventilator zur Durchleitung eines Kühlfluides durch den rohrförmigen Hohlraum des Batteriezellenmodulsystems ausgebildet ist.

Die Durchleitung eines Kühlfluides mittels eines Ventilators stellt eine aktive Kühlung dar und erlaubt vorteilhafterweise, die Innentemperatur des Batteriezellenmodulsystems trotz gestiegener Außentemperatur konstant zu halten.

Weitere Vorteile, Merkmale und Einzelheiten der Erfindung ergeben sich aus den im Folgenden beschriebenen Ausführungsbeispielen sowie anhand der Figuren. Dabei zeigen schematisiert:
- Figur 1: ein Batteriezellenmodul als Ausführungsbeispiel mit männlichen Verbindungselement und weiblichen Verbindungselement zur Ausbildung einer Steckverbindung;
- Figur 2: zwei Batteriezellenmodule die durch eine Steckverbindung mit Splintsicherung als Ausführungsbeispiel ein Batteriezellenmodulsystem bilden;
- Figur 3: ein Batteriezellenmodul als Ausführungsbeispiel mit männlichen Verbindungselement und weiblichen Verbindungselement zur Ausbildung einer Schraubverbindung;
- Figur 4: zwei Batteriezellenmodule die durch eine Schnappverbindung als Ausführungsbeispiel ein Batteriezellenmodulsystem bilden;
- Figur 5: ein Batteriezellenmodul als Ausführungsbeispiel in rohrförmiger Ausbildung;
- Figur 6: zwei rohrförmige Batteriezellenmodule die durch eine Steckverbindung als Ausführungsbeispiel ein Batteriezellenmodulsystem bilden;
- Figur 7: ein Batteriezellenmodul als Ausführungsbeispiel mit einer Verjüngung des Querschnitts entlang der Längsachse; und
- Figur 8: vier Batteriezellenmodule mit einer Verjüngung des Querschnitts entlang der Längsachse als Ausführungsbeispiel für die Ausbildung eines Batteriezellenmodulsystems.

Gleichartige, gleichwertige oder gleichwirkende Elemente können in den Figuren mit denselben Bezugszeichen versehen sein.

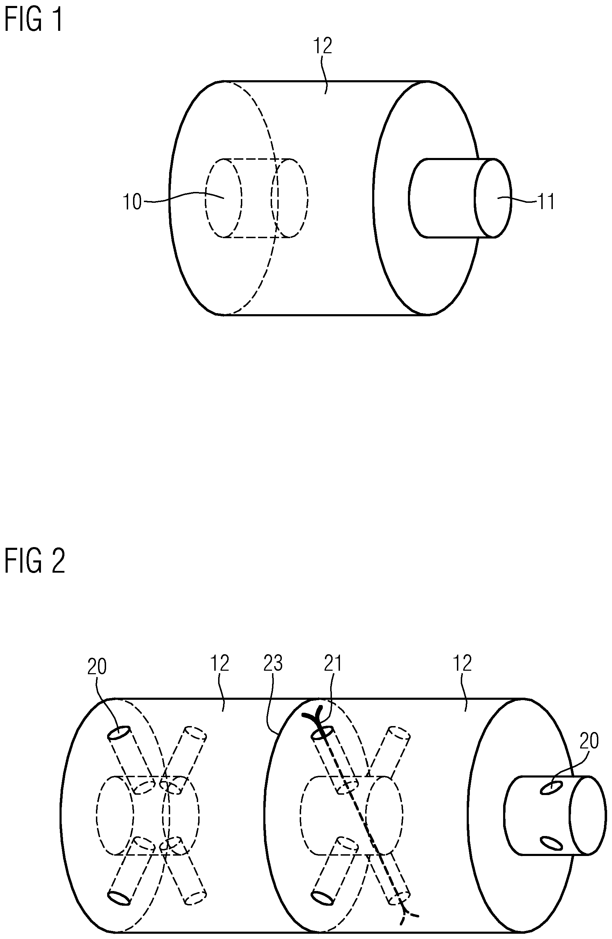

Die Figur 1 zeigt schematisch ein Batteriezellenmodul 12 mit männlichen Verbindungselement 11 und weiblichen Verbindungselement 10 zur Ausbildung einer Steckverbindung.

Gemäß der vorliegenden Ausgestaltung ermöglicht das Batteriezellenmodul 12 die Fertigstellung einer Steckverbindung mit wenigstens einem weiteren Batteriezellenmodul 12, durch das Einführen des männlichen Verbindungselements 11 eines ersten Batteriezellenmoduls 12 in das weibliche Verbindungselement 10 eines zweiten Batteriezellenmoduls 12.

Die Steckverbindung wenigstens zweier Batteriezellenmodule 12 realisiert eine formschlüssige Verbindung und kann durch eine Verengung der Passform zwischen männlichen Verbindungselements 11 und weiblichen Verbindungselements 10 zu einer kraftschlüssigen Verbindung erweitert sein.

Die Figur 2 zeigt als Ausführungsbeispiel zwei Batteriezellenmodule 12 welche durch eine, mit einem Splint 21 gesicherte, Steckverbindung 23 zu einem Batteriezellenmodulsystem verbunden sind.

Die Sicherung der Verbindung zweier Batteriezellenmodule 12 durch einen Splint 21 ist auch mit einer Schraubverbindungen kombinierbar.

Für die Sicherung der Verbindung zweier Batteriezellenmodule 12 durch einen Splint 21 besitzt jedes Batteriezellenmodul 12 Bohrungen 20 für die Einführung des Splints 21.

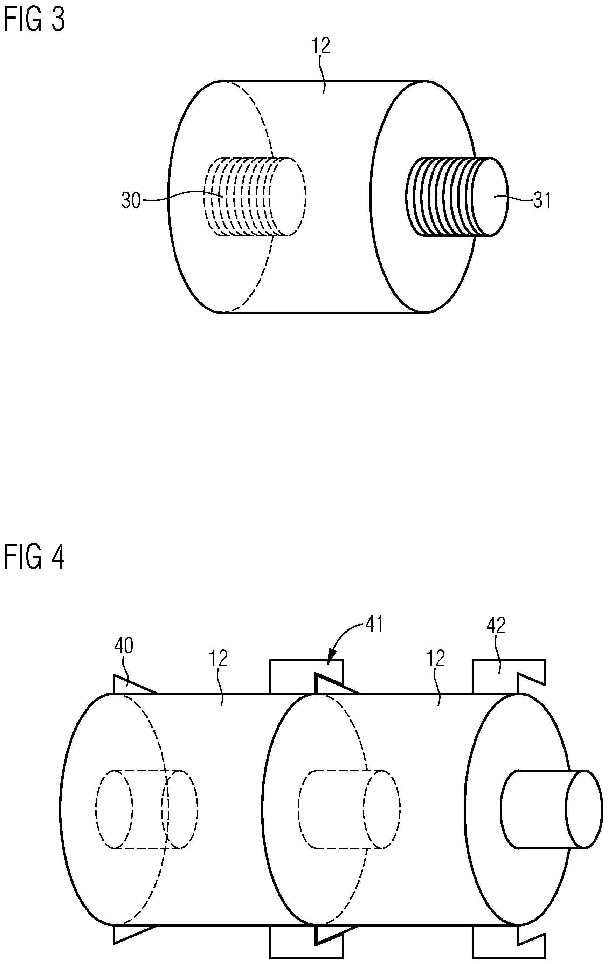

Die Figur 3 zeigt das Ausführungsbeispiel eines Batteriezellenmoduls 12 mit Verbindungselementen zur Fertigstellung einer Schraubverbindung zwischen wenigstens zwei Batteriezellenmodulen 12.

Das männliche Verbindungselement 31 weist ein Außengewinde auf und das weibliche Verbindungselement 30 weist ein Innengewinde auf. Die Abmessungen der beiden Gewinde ermöglichen eine gemeinsame Verschraubung dieser.

Die Figur 4 zeigt das Ausführungsbeispiel zweier Batteriezellenmodule, die durch eine Schnappverbindung verbunden sind.

Die fertiggestellte Schnappverbindung 41 besteht aus einem Schnapphaken 42 und einer Schnapphakenhalterung 40.

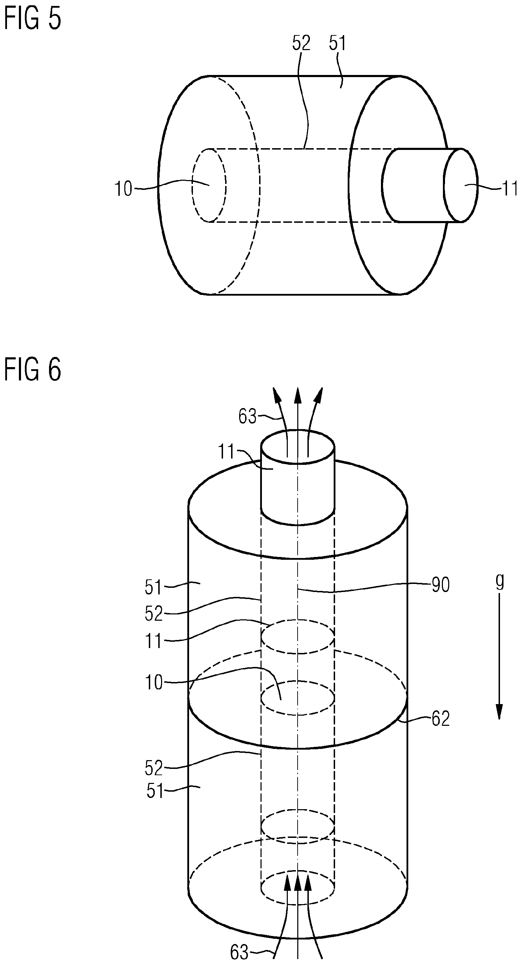

Die Figur 5 zeigt das Ausführungsbeispiel eines rohrförmigen Batteriezellenmoduls 51, mit einem weiblichen Verbindungselement 10 und einem männlichen Verbindungselement 11, die einen rohrförmigen Hohlraum 52 entlang der Längsachse des rohrförmigen Batteriezellenmoduls 51 bilden.

Die Figur 6 zeigt das Ausführungsbeispiel zweier rohrförmiger Batteriezellenmodule 51, die gemeinsam ein Batteriezellenmodulsystem mit einem zusammengesetzten rohrförmigen Hohlraum aus den beiden einzelnen rohrförmigen Hohlräumen 52 ausbildet.

Das Ausführungsbeispiel zeigt eine fertiggestellte Steckverbindung 62 aus einem weiblichen Verbindungselement 10 und einem männlichen Verbindungselement 11.

Das Ausführungsbeispiel begünstigt eine Durchleitung eines Kühlfluides 63 durch Ausrichtung der Längsachse 90 des Batteriezellenmodulsystems parallel zur Wirkrichtung des Gravitationsfelds der Erde.

Mit anderen Worten ermöglicht das Ausführungsbeispiel die Nutzung des Kamineffekts, um eine effektivere Durchleitung eines Kühlfluides zu realisieren.

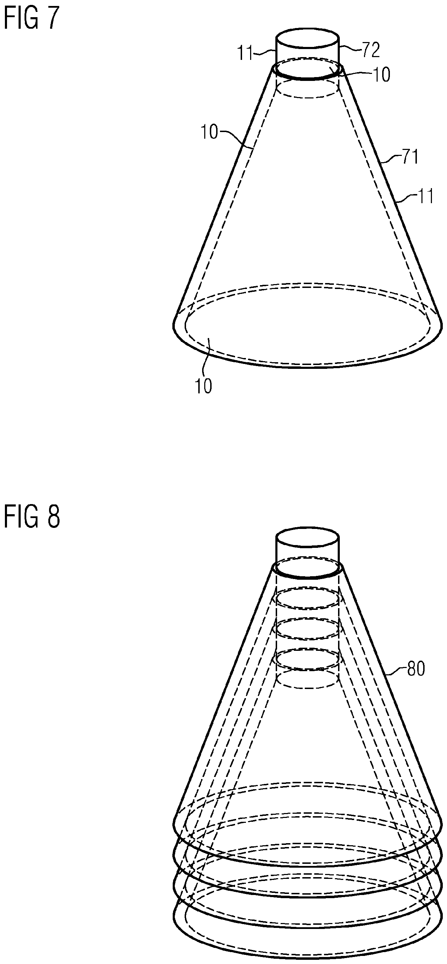

Die Figur 7 zeigt das Ausführungsbeispiel eines Batteriezellenmoduls 71 mit Querschnittsverjüngung entlang der Längsachse. Das Batteriezellenmodul 71 kann dadurch hohlkegelstumpfartig ausgebildet sein.

Das Batteriezellenmodul 71 weist ein männliches Verbindungselement 11 und ein weibliches Verbindungselement 10 auf, wobei beide Verbindungselemente sich über die gesamte Längsachse des Batteriezellenmoduls erstrecken können.

Mit anderen Worten beansprucht das weibliche Verbindungselement 10 die Innenseite und das männliche Verbindungselement 11 die Außenseite des insbesondere hohlkegelstumpfartigen Batteriezellenmodul 71.

Das Fertigstellen einer Verbindung zweier Batteriezellenmodule 71 kann durch das Stapeln dieser erfolgen, insbesondere wird durch das Stapeln eine Steckverbindung realisiert.

Der zylinderförmige Fortsatz 72 kann durch ein Innengewinde und Außengewinde erweitert werden und ermöglicht dadurch eine Verschraubung zweier Batteriezellenmodule 71.

Figur 8 zeigt das Ausführungsbeispiel einer mechanischen Kaskadierung von vier Batteriezellenmodule 80, mit einer Verjüngung des Querschnitts entlang der Längsachse, durch Stapelung.

Die Kaskadierung im Ausführungsbeispiel wird durch eine Stapelung erreicht. Diese Stapelung von Batteriezellenmodulen mit dem Formfaktor eines Hütchens kann eine formschlüssige Verbindung realisieren.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 10: Weibliches Verbindungselement
- 11: Männliches Verbindungselement
- 12: Batteriezellenmodul
- 20: Bohrung für Splint
- 22: Splint
- 23: Durch einen Splint gesicherte Verbindung zweier Batteriezellenmodule zu einem Batteriezellenmodulsystem
- 30: Weibliches Verbindungselement mit Innengewinde
- 31: Männliches Verbindungselement mit Außengewinde
- 40: Schnapphakenhalterung
- 41: Fertiggestellte Schnappverbindung
- 42: Schnapphaken
- 51: Rohrförmiges Batteriezellenmodul
- 52: Rohrförmiger Hohlraum
- 62: Fertiggestellte Steckverbindung
- 63: Kühlfluid
- 71: Batteriezellenmodul mit Querschnittsverjüngung entlang der Längsachse
- 72: Zylinderförmiger Fortsatz
- 80: Batteriezellenmodulsystem als Stapelung aus Batteriezellenmodulen mit Querschnittsverjüngung entlang der Längsachse
- 90: Längsachse

## Patentansprüche

1. Batteriezellenmodul für eine mechanische Kaskadierung von mehreren Batteriezellenmodulen, **dadurch gekennzeichnet, dass** am ersten Ende einer Längsachse des Batteriezellenmodules ein männliches Verbindungselement und am zweiten Ende der Längsachse des Batteriezellenmodules ein weibliches Verbindungselement angeordnet ist, wobei die Verbindungselemente dazu ausgebildet sind, wenigstens zwei Batteriezellenmodule durch eine zerstörungsfrei lösbare unmittelbare Verbindung der Verbindungselemente mechanisch zu kaskadieren.

2. Batteriezellenmodul gemäß Anspruch 1, **dadurch gekennzeichnet, dass** die Verbindungselemente zu einer Sicherung der zerstörungsfrei lösbaren Verbindung wenigstens zweier Batteriezellenmodule mittels eines Splints ausgebildet sind.

3. Batteriezellenmodul gemäß Anspruch 1 oder 2, **dadurch gekennzeichnet, dass** das männliche Verbindungselement mit einem Außengewinde und das weibliche Verbindungselement mit einem Innengewinde zur Ausbildung einer zerstörungsfrei lösbaren Schraubverbindung ausgebildet sind.

4. Batteriezellenmodul gemäß einem der vorhergehenden Ansprüche, **dadurch gekennzeichnet, dass** die Verbindungselemente zur Ausbildung einer zerstörungsfrei lösbaren Steckverbindung ausgebildet sind.

5. Batteriezellenmodul gemäß einem der vorhergehenden Ansprüche, **dadurch gekennzeichnet, dass** die Verbindungselemente zur Ausbildung einer zerstörungsfrei lösbaren Schnappverbindung ausgebildet sind.

6. Batteriezellenmodul gemäß einem der vorhergehenden Ansprüche, **dadurch gekennzeichnet, dass** das männliche Verbindungselement als zylinderförmige Erweiterung des Batteriezellenmoduls mit einem reduzierten Außendurchmesser ausgebildet ist.

7. Batteriezellenmodul gemäß einem der vorhergehenden Ansprüche, **dadurch gekennzeichnet, dass** das Batteriezellenmodul zylinderförmig ist, wobei das männliche Verbindungselement als Fortsatz des Batteriezellenmoduls mit einem Sehnenpolygon als Querschnittsfläche ausgebildet ist, wobei der Durchmesser des zum Sehnenpolygon gehörenden Umkreises, kleiner oder gleich dem Außendurchmesser des Batteriezellenmoduls ist.

8. Batteriezellenmodul gemäß einem der vorhergehenden Ansprüche, **dadurch gekennzeichnet, dass** das Batteriezellenmodul rohrförmig ausgebildet ist.

9. Batteriezellenmodul gemäß einem der vorhergehenden Ansprüche, **dadurch gekennzeichnet, dass** das Batteriezellenmodul entlang seiner Längsachse einen sich verjüngenden Außendurchmesser aufweist.

10. Batteriezellenmodulsystem, umfassend wenigstens zwei Batteriezellenmodule, **dadurch gekennzeichnet, dass** jedes der Batteriezellenmodule gemäß einem der vorhergehenden Ansprüche ausgebildet ist, wobei jedes der Batteriezellenmodule an einem ersten Ende seiner Längsachse ein männliches Verbindungselement und an einem zweiten Ende seiner Längsachse ein weibliches Verbindungselement aufweist, wobei die Verbindungselemente dazu ausgebildet sind, die zwei Batteriezellenmodule durch eine zerstörungsfrei lösbare Verbindung der Verbindungselemente zu dem Batteriezellenmodulsystem unmittelbar mechanisch zu kaskadieren.

11. Batteriezellenmodulsystem gemäß Anspruch 10, **dadurch gekennzeichnet, dass** wenigstens zwei verbundene Batteriezellenmodule gemeinsam ein Batteriezellenmodulsystems mit einem rohrförmigen Hohlraum ausbilden, wobei dieser rohrförmige Hohlraum zur Durchleitung eines Kühlfluides ausgebildet ist.

12. Batteriezellenmodulsystem gemäß Anspruch 11, **dadurch gekennzeichnet, dass** wenigstens ein Ventilator an wenigstens einem Ende des Batteriezellenmodulsystems angeordnet ist, wobei der Ventilator zur Durchleitung eines Kühlfluides durch den rohrförmigen Hohlraum des Batteriezellenmodulsystems ausgebildet ist.
